# EUROPÄISCHE PATENTANMELDUNG

(11) **EP 1 096 237 A2**
(43) Veröffentlichungstag der Anmeldung: **02.05.2001**
(21) Anmeldenummer: 00123043.2
(22) Anmeldetag: 24.10.2000
(51) Int. Cl.: G01F 1/66

(54) **Ultraschall-Durchflussmessgerät**

(30) Priorität: 28.10.1999 DE 19951874
(71) Anmelder: Krohne AG, 4019 Basel (CH)
(72) Erfinder: Molenaar, Marcel Maylom, 3311 LT Dordrecht (NL)
(74) Vertreter: Gesthuysen, von Rohr & Eggert

(57) **Zusammenfassung**

Dargestellt und beschrieben ist ein Ultraschall-Durchflußmeßgerät für strömende Medien, das nach dem Laufzeit-Verfahren arbeitet, mit einem Meßrohr (1) und wenigstens einem Sende- und/oder Empfangskopf (2), wobei der Sende- und/oder Empfangskopf (2) ein Gehäuse (3) und einen Ultraschalltransducer (4) aufweist, mit dem Ultraschallsignale in das strömende Medium aussendbar bzw. Ultraschallsignale aus dem strömenden Medium empfangbar sind.

Das erfindungsgemäße Ultraschall-Durchflußmeßgerät für strömende Medien ist dadurch gekennzeichnet, daß seitlich um das Gehäuse (3) des Sende- und/oder Empfangskopfes (2) herum und an diesem wenigstens teilweise anliegend eine Dämpfungsvorrichtung (5) mit wenigstens einem Dämpfungselement (6) angeordnet ist und die Dämpfungsvorrichtung (5) in einer Ausnehmung (7) des Meßrohrs (1) vorgesehen ist.

## Beschreibung

Die Erfindung betrifft ein Ultraschall-Durchflußmeßgerät für strömende Medien, das nach dem Laufzeit-Verfahren arbeitet, mit einem Meßrohr und wenigstens einem Sende- und/oder Empfangskopf, wobei der Sende- und/oder Empfangskopf ein Gehäuse und einen Ultraschalltransducer aufweist, mit dem Ultraschallsignale in das strömende Medium aussendbar bzw. Ultraschallsignale aus dem strömenden Medium empfangbar sind.

Bei der betrieblichen Durchflußmessung von strömenden Medien, d. h. von strömenden Flüssigkeiten bzw. strömenden Gasen, hat der Einsatz von Ultraschall-Durchflußmeßgeräten in letzter Zeit in zunehmendem Maße an Bedeutung gewonnen. Insbesondere ist dabei vorteilhaft, daß, wie z. B. auch bei magnetisch-induktiven Durchflußmeßgeräten, die Durchflußmessung derart erfolgen kann, daß keine Einbauten in der Strömung erforderlich sind, so daß die Strömung durch die Messung keine Störungen erfährt.

Bei Ultraschall-Durchflußmeßgeräten unterscheidet man hinsichtlich des Meßverfahrens vor allem zwischen dem Laufzeit-Verfahren einerseits und dem Doppler-Verfahren andererseits. Die beim Laufzeit-Verfahren erreichbare Genauigkeit ist dabei wesentlich größer als beim Doppler-Verfahren. Deshalb werden bevorzugt Ultraschall-Durchflußmeßgeräte eingesetzt, die nach dem Laufzeit-Verfahren, und zwar insbesondere nach dem Laufzeit-Differenz-Verfahren, arbeiten.

Die Laufzeit eines Ultraschallsignals auf dem Meßpfad von dem Ultraschallsignale aussendenden Ultraschalltransducer zu dem die Ultraschallsignale empfangenden Ultraschalltransducer in einer Flüssigkeit ergibt sich aus der Schallgeschwindigkeit in der Flüssigkeit bzw. in dem in der Flüssigkeit mitgeführten Gas sowie aus der Strömungsgeschwindigkeit der Flüssigkeit bzw. des mitgeführten Gases. Daraus ist das in Rede stehende Prinzip der Ultraschall-Durchflußmessung nach dem Laufzeit-Verfahren abgeleitet. Beim Laufzeit-Differenz-Verfahren werden in der Flüssigkeit bzw. in dem Gas Ultraschallsignale wechselweise oder gleichzeitig stromaufwärts und stromabwärts gesendet. Wegen der unterschiedlichen Ausbreitungsgeschwindigkeiten erreichen die Signale bei gleich langem geometrischen Meßpfad stromaufwärts bzw. stromabwärts die als Empfänger arbeitenden Ultraschalltransducer zu voneinander verschiedenen Laufzeiten. Dabei ist die Laufzeit-Differenz der beiden Schallwellen direkt proportional zur Durchflußgeschwindigkeit des strömenden Mediums.

Für eine Ultraschall-Durchflußmessung eines strömenden Mediums sind ein das strömende Medium führendes Meßrohr und mindestens ein Ultraschalltransducer, vorzugsweise zwei in Strömungsrichtung gegeneinander versetzt angeordnete Ultraschalltransducer, sowie eine Steuer- und Auswerteschaltung zur Bestimmung der Laufzeit der Ultraschallsignale erforderlich. Die Steuer- und Auswerteschaltung kann darüber hinaus aus der Laufzeit die Strömungsgeschwindigkeit, das Durchflußvolumen und andere Parameter des strömenden Mediums berechnen.

Jedoch kommt es bei einer Ultraschall-Durchflußmessung eines strömenden Mediums nicht nur zur Übertragung, d. h. zur Aussendung und zum Empfang, von Ultraschallsignalen, die durch das strömende Medium hindurchgelaufen sind, sondern auch von solchen Ultraschallsignalen, die über das Meßrohr hinweg von dem Ultraschallsignale aussendenden Ultraschalltransducer zu dem Ultraschallsignale empfangenden Ultraschalltransducer gelangen. Dies führt zu einem Störsignal, das die Ultraschall-Durchflußmessung unter Umständen erheblich beeinträchtigt. Das über das Meßrohr hinweg übertragene Ultraschallsignal ist insbesondere insofern besonders störend, da es sich dabei wenigstens teilweise um ein kohärentes Signal handelt, das bei der Unterdrückung nicht wie normales Rauschen behandelt werden kann.

Um dieses Problem zu lösen, sind in der Vergangenheit verschiedene Vorschläge gemacht worden, die Übertragung von Ultraschallsignalen von dem sendenden Ultraschalltransducer zu dem empfangenden Ultraschalltransducer über das Meßrohr hinweg zu vermeiden. Dabei wurde z. B. vorgeschlagen, den schwingenden Ultraschalltransducer mit Hilfe von z. B. Gummidichtungen oder ähnlichen Einrichtungen schwingungsmäßig möglichst gut von dem Meßrohr zu isolieren. Ähnliche Ansätze haben darin gelegen, den Raum, in dem der Ultraschalltransducer angeordnet ist, möglichst weitgehend mit einem dämpfenden Material, wie Wachs, Gummi oder einem Kunststoff, auszufüllen. Diesbezüglich sei exemplarisch auf die US 4,410,825, US 4,945,276 und die US 5,515,733 verwiesen.

Der Erfindung liegt folglich die Aufgabe zugrunde, die bekannten Ultraschall-Durchflußmeßgeräte derart weiterzubilden, daß Störungen der Ultraschall-Durchflußmessung an einem strömenden Medium durch über das Meßrohr hinweg übertragene Ultraschallsignale möglichst weitgehend vermieden werden.

Die zuvor hergeleitete und aufgezeigte Aufgabe ist erfindungsgemäß dadurch gelöst, daß seitlich um das Gehäuse des Sende- und/oder Empfangskopfes herum und an diesem wenigstens teilweise anliegend eine Dämpfungsvorrichtung mit wenigstens einem Dämpfungselement angeordnet ist und die Dämpfungsvorrichtung in einer Ausnehmung des Meßrohrs vorgesehen ist.

Erfindungsgemäß ist somit das Gehäuse des Sende- und/oder Empfangskopfes, in dem der schwingende Ultraschalltransducer angeordnet ist, nicht direkt sondern mittels einer Dämpfungsvorrichtung mit dem Meßrohr verbunden, so daß die Ultraschallsignale nur durch die Dämpfungsvorrichtung hindurch in das Meßrohr eingekoppelt werden. Der Übergang von dem Gehäuse in die Dämpfungsvorrichtung, die zwar mit dem Gehäuse mechanisch verbunden ist, erfindungsgemäß jedoch mit diesem nicht einstückig ausgebildet ist, führt zu einer erheblichen Verringerung des Ultraschallsignals bei dessen Durchgang durch die Grenzfläche zwischen dem Gehäuse und der Dämpfungsvorrichtung. Zusätzlich wird durch die Streuung des Schalls an der Grenzfläche auch die Kohärenz des Signals wesentlich vermindert.

Durch den Kontakt des Gehäuses mit dem Dämpfungselement sowie durch den Kontakt des Dämpfungselements mit dem Meßrohr kann schon eine ausreichende Abdichtung des Inneren des Meßrohrs von der Umgebung erzielt werden. Werden an die Dichtigkeit des Ultraschall-Durchflußmeßgeräts jedoch höhere Anforderungen gestellt, so ist das erfindungsgemäße Ultraschall-Durchflußmeßgerät vorzugsweise dadurch weitergebildet, daß zwischen dem Gehäuse und der Dämpfungsvorrichtung einerseits sowie zwischen der Dämpfungsvorrichtung und dem Meßrohr andererseits jeweils eine Dichtung vorgesehen ist.

Das Gehäuse kann z. B. in die Dämpfungsvorrichtung eingesteckt oder eingeschoben sein, indem z. B. eine Ausnehmung in der Dämpfungsvorrichtung entsprechend der Außenseite des Gehäuses konisch ausgebildet ist. Vorzugsweise weist das Gehäuse jedoch ein Außengewinde und die Dämpfungsvorrichtung ein Innengewinde auf, so daß das Gehäuse mit seinem Außengewinde in das Innengewinde der Dämpfungsvorrichtung eingeschraubt sein kann. Dies ermöglicht einen besonders festen Sitz der Dämpfungsvorrichtung in dem Gehäuse, wobei die Verschraubung zusätzlich abdichtend wirkt. Außerdem wird durch die Verschraubung die Grenzfläche zwischen dem Gehäuse und der Dämpfungsvorrichtung wesentlich vergrößert, was einen positiven Einfluß auf die Dämpfung des durch die Grenzfläche hindurchtretenden Ultraschallsignals hat sowie zur Verringerung von dessen Kohärenz beiträgt.

Die Größe der Grenzfläche, durch die die Ultraschallsignale hindurchtreten müssen, um vom Ultraschalltransducer in das Meßrohr zu gelangen, kann ferner dadurch vergrößert werden, daß die Dämpfungsvorrichtung mehrere, ineinander geschachtelte, wenigstens teilweise aneinander anliegende Dämpfungselemente aufweist. Auf diese Weise muß das Ultraschallsignal vom Ultraschalltransducer kommend nacheinander durch mehrere hintereinander liegende Grenzschichten hindurchtreten, um in das Meßrohr zu gelangen.

Die Dämpfungselemente können selbst abdichtend sein, wenn sie z. B. fest ineinander gesteckt oder ineinander geschraubt sind. Vorzugsweise ist jedoch vorgesehen, daß zwischen den Dämpfungselementen jeweils eine Dichtung angebracht ist.

Das Meßrohr, das Gehäuse und die Dämpfungsvorrichtung mit den Dämpfungselementen ist aus einer Vielzahl von Materialien herstellbar, die lediglich die Anforderungen einer entsprechenden Druckfestigkeit sowie einer chemischen Beständigkeit gegenüber dem strömenden Medium aufweisen müssen. Vorzugsweise ist jedoch vorgesehen, daß das Meßrohr, das Gehäuse und wenigstens ein Dämpfungselement aus Metall - vorzugsweise aus Edelstahl - bestehen.

Einander benachbarte Bauteile, d. h. Meßrohr, Gehäuse oder Dämpfungselemente, die beide aus Metall ausgebildet sind, sind vorzugsweise dadurch mit einer Dichtung versehen, daß sie miteinander verschweißt sind.

Es ist jedoch auch vorgesehen, wenigstens ein Dämpfungselemente aus Kunststoff auszubilden, was zu einer zusätzlichen Dämpfung des Ultraschallsignals aufgrund einer erhöhten Absorption des Ultraschallsignals im Kunststoff führt. Ferner kann ein aus Kunststoff ausgeführtes Dämpfungselement, das fest und dicht zwischen zwei Metallbauteilen vorgesehen ist, gleichzeit als Dichtung verwendet werden.

Insbesondere bei der Verwendung wenigstens eines Dämpfungselements aus Kunststoff ist vorzugsweise wenigstens eine der Dichtungen aus Gummi oder aus Kunststoff, wobei insbesondere als Dichtungen O-Ringe aus Viton Verwendung finden.

Eine besonders geringe Übertragung des Ultraschallsignals auf das Meßrohr durch die Dämpfungsvorrichtung hindurch wird dann erzielt, wenn die Dämpfungsvorrichtung lediglich an ihrer dem Ultraschalltransducer abgewandten Seite an dem Meßrohr befestigt ist. Bei einer solchen Konstruktion muß der Ultraschall, bevor er in das Meßrohr eindringen kann, die gesamte Länge des Gehäuses bzw. der Dämpfungsvorrichtung durchlaufen, was eine erhöhte Schalldämpfung zur Folge hat.

Die Dämpfungsvorrichtung kann direkt in einer Ausnehmung des Meßrohrs angeordnet sein, vorzugsweise ist jedoch vorgesehen, daß das Meßrohr einen Stutzen aufweist, in dem die Dämpfungsvorrichtung angeordnet ist. Dabei ist es besonders bevorzugt, daß die Dämpfungsvorrichtung in dem Stutzen im Abstand von dessen Innenwand angeordnet ist, so daß der oben beschriebene Effekt eintritt, daß nämlich der Ultraschall vor seinem Eintritt in den Stutzen bzw. in das Meßrohr die gesamte Länge des Gehäuses bzw. der Dämpfungsvorrichtung durchlaufen muß. Diesbezüglich wird insbesondere dadurch eine besonders vorteilhafte Anordnung erzielt, wenn die Dämpfungsvorrichtung lediglich am freien Ende des Stutzens mit diesem verbunden ist. Bestehen der Stutzen und wenigstens das äußerste Dämpfungselement beide aus Metall, ist vorzugsweise eine Verbindung des äußersten Dämpfungselements mit dem Stutzen durch eine Schweißnaht vorgesehen, die gleichzeitig abdichtend wirkt.

Im einzelnen gibt es nun eine Vielzahl von Möglichkeiten, das erfindungsgemäß Ultraschall-Durchflußmeßgerät für strömende Medien auszugestalten und weiterzubilden. Dazu wird einerseits auf die dem Patentanspruch 1 nachgeordneten Patentansprüche, andererseits auf die Beschreibung von bevorzugten Ausführungsbeispielen der Erfindung in Verbindung mit der Zeichnung verwiesen. In der Zeichnung zeigen
- Fig. 1: einen Schnitt durch eine Anordnung gemäß einem ersten bevorzugten Ausführungsbeispiel und
- Fig. 2: einen Schnitt durch eine Anordnung gemäß einem zweiten bevorzugten Ausführungsbeispiel der Erfindung.

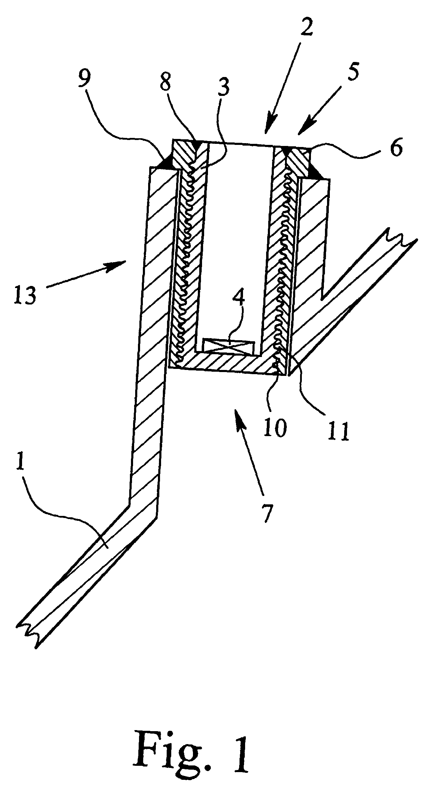

Fig. 1 zeigt im Schnitt eine Anordnung gemäß einem ersten bevorzugten Ausführungsbeispiel der Erfindung. Lediglich angedeutet ist ein Meßrohr 1, an dem ein Sende- und/oder Empfangskopf 2 angebracht ist, der ein Gehäuse 3 und einen Ultraschalltransducer 4 aufweist. Der Ultraschalltransducer 4 wird vorliegend von einem Piezokristall gebildet. Seitlich um das Gehäuse 3 des Sende- und/oder Empfangskopfs 2 herum ist eine Dämpfungsvorrichtung 5 vorgesehen, die gemäß dem ersten bevorzugten Ausführungsbeispiel der Erfindung genau ein Dämpfungselement 6 aufweist. Der Sende- und/oder Empfangskopf 2 ist zusammen mit der Dämpfungsvorrichtung 5 in einer Ausnehmung 7 des Meßrohrs 1 angeordnet. Durch die Ausnehmung 7 hindurch werden Ultraschallsignale in das strömende Medium abgegeben oder aus dem strömenden Medium empfangen.

Die Anordnung gemäß dem ersten bevorzugten Ausführungsbeispiel der Erfindung ist mittels Dichtungen 8 zwischen dem Gehäuse 3 und der Dämpfungsvorrichtung 5 sowie mittels Dichtungen 9 zwischen der Dämpfungsvorrichtung 5 und dem Meßrohr 1 abgedichtet. Das Gehäuse 3, die Dämpfungsvorrichtung 5, bestehend aus dem Dämpfungselement 6, sowie das Meßrohr 1 sind vorliegend aus Edelstahl gefertigt, so daß die Dichtung 8 sowie die Dichtung 9 als Schweißnähte ausgeführt sein können. Das Gehäuse 3 weist ein Außengewinde 10 auf, und das Dämpfungselement 6 weist ein Innengewinde 11 auf. Mit seinem Außengewinde 10 ist das Gehäuse 3 in das Innengewinde 11 des Dämpfungselements 6 eingeschraubt, so daß eine große Grenzfläche zwischen dem Gehäuse 3 und dem Dämpfungselement 6 sowie ein fester Sitz des Gehäuses 3 in dem Dämpfungselement 6 erzielt wird.

Gemäß dem ersten bevorzugten Ausführungsbeispiel der Erfindung ist eine Anordnung gewählt worden, bei der das Meßrohr 1 einen Stutzen 13 aufweist, in den der Sende- und/oder Empfangskopf 2 zusammen mit der Dämpfungsvorrichtung 5 eingesteckt ist. Der Stutzen 13 des Meßrohrs 1 bietet den Vorteil, daß der Sende- und/oder Empfangskopf 2 nicht in die Strömung hineinragt, so daß diese durch die Ultraschall-Durchflußmessung nicht gestört wird und somit das Meßergebnis durch die Meßvorrichtung nicht verfälscht wird.

Wie aus Fig. 1 ersichtlich, ist das Dämpfungselement 6 lediglich an seinem dem Ultraschalltransducer 4 abgewandten Ende mit dem Stutzen 13 verbunden, nämlich mittels einer Schweißnaht 9 verschweißt, die gleichzeitig als Dichtung wirkt. Die Innenfläche des Stutzens 13 und das Dämpfungselement 6 sind im Abstand voneinander angeordnet, so daß es lediglich zu einer Übertragung des Ultraschallsignals von der Dämpfungsvorrichtung 5 in das Meßrohr 1 bzw. in den Stutzen 13 an dem dem Ultraschalltransducer 4 abgewandten Ende der Dämpfungsvorrichtung 5 kommen kann. Dies bewirkt, wie oben schon ausgeführt, eine zusätzliche Dämpfung des in das Meßrohr 1 eingekoppelten Ultraschallsignals.

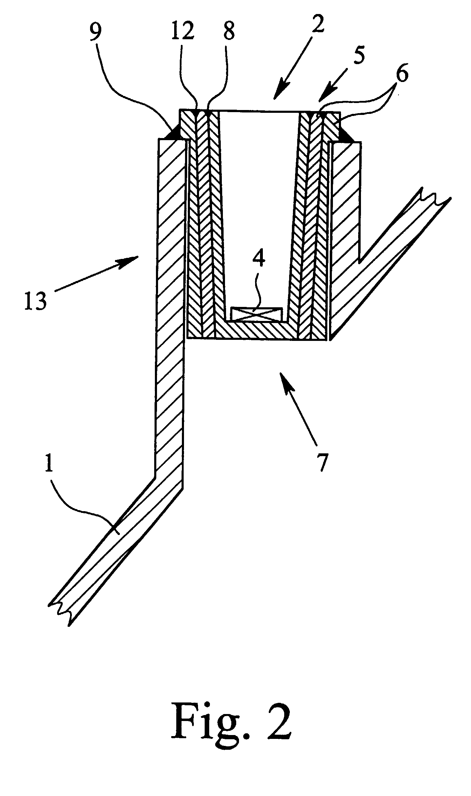

Aus Fig. 2 ist im Schnitt eine Anordnung gemäß einem zweiten bevorzugten Ausführungsbeispiels der Erfindung ersichtlich. Der Aufbau des Sende- und/oder Empfangskopfes 2 gemäß dem zweiten bevorzugten Ausführungsbeispiel entspricht im wesentlichen dem des in Fig. 1 gezeigten Sende- und/oder Empfangskopfes 2 gemäß dem ersten bevorzugten Ausführungsbeispiel. Im Gegensatz zu der aus Fig. 1 ersichtlichen Anordnung ist vorliegend jedoch eine Dämpfungsvorrichtung 5 mit mehreren, nämlich zwei, Dämpfungselementen 6 vorgesehen, wobei die Dämpfungsvorrichtung 5 und das Gehäuse 3 keine Gewinde aufweisen, mit denen sie miteinander verschraubt werden können. Stattdessen sind die beiden, ineinander geschachtelten Dämpfungselemente 6 sowie das Gehäuse 3 konisch ausgebildet. Auf diese Weise können das Gehäuse 3 und die Dämpfungselemente 6 einfach ineinander gesteckt werden, so daß einerseits ein guter Halt des Gehäuses 3 in der Dämpfungsvorrichtung 5 erzielt wird und andererseits schon eine gewisse Abdichtung erreicht wird.

Das Gehäuse 3, die Dämpfungselemente 6 sowie das Meßrohr 1 mit dem Stutzen 13 sind ebenfalls, wie beim ersten bevorzugten Ausführungsbeispiel der Erfindung, aus Edelstahl ausgeführt, so daß als Dichtung 8 zwischen dem Gehäuse 3 und dem innersten Dämpfungselement 6, als Dichtung 9 zwischen dem äußersten Dämpfungselement 6 und dem Stutzen 13 des Meßrohrs 1 und als Dichtung 12 zwischen den beiden Dämpfungselementen 6 jeweils eine Schweißnaht ausgeführt ist.

## Patentansprüche

1. Ultraschall-Durchflußmeßgerät für strömende Medien, das nach dem Laufzeit-Verfahren arbeitet, mit einem Meßrohr (1) und wenigstens einem Sende- und/oder Empfangskopf (2), wobei der Sende- und/oder Empfangskopf (2) ein Gehäuse (3) und einen Ultraschalltransducer (4) aufweist, mit dem Ultraschallsignale in das strömende Medium aussendbar bzw. Ultraschallsignale aus dem strömenden Medium empfangbar sind, **dadurch gekennzeichnet,** daß seitlich um das Gehäuse (3) des Sende- und/oder Empfangskopfes (2) herum und an diesem wenigstens teilweise anliegend eine Dämpfungsvorrichtung (5) mit wenigstens einem Dämpfungselement (6) angeordnet ist und die Dämpfungsvorrichtung (5) in einer Ausnehmung (7) des Meßrohrs (1) vorgesehen ist.

2. Ultraschall-Durchflußmeßgerät nach Anspruch 1, dadurch gekennzeichnet, daß zwischen dem Gehäuse (3) und der Dämpfungsvorrichtung (5) eine erste Dichtung (8) vorgesehen ist sowie zwischen der Dämpfungsvorrichtung (5) und dem Meßrohr (1) eine zweite Dichtung (9) vorgesehen ist.

3. Ultraschall-Durchflußmeßgerät nach Anspruch 1 oder 2, dadurch gekennzeichnet, daß das Gehäuse (3) ein Außengewinde (10) aufweist, die Dämpfungsvorrichtung (5) ein Innengewinde (11) aufweist und das Gehäuse (3) mit seinem Außengewinde (10) in das Innengewinde (11) der Dämpfungsvorrichtung (5) eingeschraubt ist.

4. Ultraschall-Durchflußmeßgerät nach einem der Ansprüche 1 bis 3, dadurch gekennzeichnet, daß die Dämpfungsvorrichtung (5) mehrere, ineinander geschachtelte, wenigstens teilweise aneinander anliegende Dämpfungselemente (6) aufweist.

5. Ultraschall-Durchflußmeßgerät nach Anspruch 4, dadurch gekennzeichnet, daß zwischen den Dämpfungselementen (6) jeweils eine Dichtung (12) vorgesehen ist.

6. Ultraschall-Durchflußmeßgerät nach einem der Ansprüche 1 bis 5, dadurch gekennzeichnet, daß das Meßrohr (1), das Gehäuse (3) und wenigstens ein Dämpfungselement (6) aus Metall - vorzugsweise aus Edelstahl - bestehen.

7. Ultraschall-Durchflußmeßgerät nach einem der Ansprüche 2 bis 6, dadurch gekennzeichnet, daß wenigstens eine der Dichtungen (8, 9, 12) aus einer Schweißnaht besteht.

8. Ultraschall-Durchflußmeßgerät nach einem der Ansprüche 1 bis 7, dadurch gekennzeichnet, daß wenigstens ein Dämpfungselement (6) aus Kunststoff besteht.

9. Ultraschall-Durchflußmeßgerät einem der Ansprüche 1 bis 8, dadurch gekennzeichnet, daß wenigstens eine der Dichtungen (8, 9, 12) aus Kunststoff oder aus Gummi besteht.

10. Ultraschall-Durchflußmeßgerät Anspruch 9, dadurch gekennzeichnet, daß wenigstens eine der Dichtungen (8, 9, 12) aus einem O-Ring aus Viton besteht.

11. Ultraschall-Durchflußmeßgerät nach einem der Ansprüche 1 bis 10, dadurch gekennzeichnet, daß die Dämpfungsvorrichtung (5) lediglich an ihrer dem Ultraschalltransducer (4) abgewandten Seite an dem Meßrohr (1) befestigt ist.

12. Ultraschall-Durchflußmeßgerät nach einem der Ansprüche 1 bis 11, dadurch gekennzeichnet, daß die Ausnehmung (7) des Meßrohrs (1) einen Stutzen (13) aufweist, in dem die Dämpfungsvorrichtung (5) angeordnet ist.

13. Ultraschall-Durchflußmeßgerät nach Anspruch 12, dadurch gekennzeichnet, daß die Dämpfungsvorrichtung (5) in dem Stutzen (13) im Abstand von dessen Innenwand angeordnet ist.

14. Ultraschall-Durchflußmeßgerät nach Anspruch 13, dadurch gekennzeichnet, daß die Dämpfungsvorrichtung (5) lediglich am freien Ende des Stutzens (13) mit diesem verbunden ist.
